Europäisches Patentamt

European Patent Office

Office européen des brevets

(11) Veröffentlichungsnummer: **0 429 846 A1**

## EUROPÄISCHE PATENTANMELDUNG

(21) Anmeldenummer: **90120274.7**

(22) Anmeldetag: **23.10.90**

(51) Int. Cl.⁵: **B64C 39/02, B64D 27/02**

(30) Priorität: **25.11.89 DE 3939107**

(43) Veröffentlichungstag der Anmeldung:
**05.06.91 Patentblatt 91/23**

(84) Benannte Vertragsstaaten:
**DE FR GB IT Patentblatt 1**

(71) Anmelder: **Grob, Burkhart Dr. h. c. Dipl.-Ing. ETH**
**Römerstrasse 68**
**W-8939 Bad Wörishofen(DE)**

(72) Erfinder: **Grob, Burkhart Dr. h. c. Dipl.-Ing. ETH**
**Römerstrasse 68**
**W-8939 Bad Wörishofen(DE)**

(74) Vertreter: **Pfister, Helmut, Dipl.-Ing.**
**Buxacher Strasse 9**
**W-8940 Memmingen/Bayern(DE)**

(54) **Flugzeug für grosse Höhen.**

(57) Das Flugzeug (3) ist gedacht für den Einsatz in Höhen von etwa 100.000 ft, beispielsweise zur Messung der Ozonverteilung. Das Flugzeug besitzt einen herkömmlichen Antrieb, beispielsweise eine Turbopropantrieb (1), mit dem eine Zwischenflughöhe von etwa 60.000 ft erreichbar ist. Durch eine Feststoffrakete (2) wird die Arbeitsflughöhe erreicht, wobei in keiner Phase der Unterschallbereich verlassen wird.

Fig. 1

# FLUGZEUG FÜR GROSSE HÖHEN

Die Erfindung betrifft ein Flugzeug für große Höhen, mit mehreren Antrieben verschiedener Ausbildung.

Flugzeuge für große Höhen, insbesondere solche mit mehreren Antrieben verschiedener Ausbildung sind in vielfältiger Bauweise bekannt geworden. So ist es in der Raumfahrt bekannt, Flugzeuge oder Flugkörper durch Raketen zu starten oder auch den Start durch Zusatzraketen zu unterstützen. Insbesondere bei der Rückkehr sollen die Fahrzeuge dann wie Flugzeuge herkömmlicher Ausbildung durch einen Verbrennungsmotor angetrieben werden.

Bei anderen Bauweisen wird vorgeschlagen, das Fluggerät durch ein Trägerflugzeug auf grope Höhen und große Geschwindigkeiten zu bringen, wobei es dann anschließend durch einen Raketenantrieb auf eine Erdumlaufbahn gebracht wird. Allgemein bekannt ist, Flugzeuge bei großer Belastung oder kurzer Startbahn beim Start durch Zusatzraketen zusätzlich anzutreiben.

Ist ein Flugzeug mit Verbrennungsmotoren herkömmlicher Ausbildung, also beispielsweise Kolbenmotoren, Turbopropmotoren oder auch Düsenmotoren angetrieben, so ist die erreichbare Flughöhe deutlich begrenzt. Durch Kolbenmotoren lassen sich in der Regel etwa 12.000 m Höhe erreichen, durch einen Turbopropantrieb etwa 16.000 m Höhe und durch einen Düsenantrieb etwa 20.000 m Höhe.

Sollen größere Höhen erreicht werden, ist dies bisher nur möglich durch Forschungsraketen oder durch Wetterballone, oder auch dadurch, dar das Flugzeug insgesamt raketenartig gestaltet wird und im Überschallbereich die großen Höhen im wesentlichen auf einer ballistischen Bahn durchfliegt.

Wenn mit diesen Luftfahrzeugen beispielsweise Messungen in der oberen Stratosphäre durchgeführt werden sollen, also etwa in Höhen von etwa 100.000 ft, erweist sich der Überschallflug als sehr hinderlich bzw. als unbrauchbar. Der Überschallflug verhindert oft brauchbare Meßergebnisse. Die anderen Hilfsmittel, mit denen es möglich ist, die obere Stratosphäre zu erreichen, bringen aber nur Meßdaten entlang einer mehr oder weniger senkrechten Linie, wie dies beispielsweise bei senkrecht aufsteigenden Raketen oder auch von Wetterballonen abgeworfenen Meßinstrumenten unvermeidbar ist.

Wünschenswert ist dagegen eine Möglichkeit, in einer horizontalen Fläche eine Vielzahl von Messungen vorzunehmen, um auf diese Weise beispielsweise die Verteilung und den Gehalt von Ozon zu ermitteln. Für andere Messungen meteorologischer Art oder auch für Luftaufnahmen gilt Ähnliches. Luftfahrzeuge, mit denen es möglich ist, mit mäßigem Aufwand auf Höhen von etwa 100.000 ft, also auf etwa 33.000 m Höhe vorzustoßen, sind bisher nicht bekannt.

Der Erfindung liegt daher die Aufgabe zugrunde, ein Flugzeug für grope Höhen zu schaffen, mit dem es möglich ist, einerseits die angegebenen Höhen mit einem erträglichen Aufwand zu erreichen und das weiter in der Lage ist, eine gewisse Zeitspanne in dieser Höhe zu verbleiben, um dort Messungen vorzunehmen, Luftproben zu entnehmen usw.

Zur Lösung dieser Aufgabe geht die Erfindung aus von einem Flugzeug für große Höhen, mit mehreren Antrieben verschiedener Ausbildung, und zwar einem ersten Antrieb mittels eines Verbrennungsmotors, dem zur Verbrennung Außenluft zugeführt wird, und einem zweiten Antrieb durch mindestens eine Rakete.

Die Erfindung löst die Aufgabe bei einem derartigen Flugzeug dadurch, daß der erste Antrieb derart ausgelegt ist, daß das Flugzeug, dessen Flächen eine geringe Flächenbelastung aufweisen, hierdurch eine Zwischenflughöhe von ca. 60.000 ft erreicht, und dar der zweite Antrieb allein ausreicht, um das Flugzeug von der Zwischenflughöhe auf eine Arbeitsflughöhe von ca. 100.000 ft zu bringen, und zwar ohne hierbei den Unterschallbereich zu verlassen.

Es ist gefunden worden, daß es durch das erfindungsgemäße Flugzeug möglich ist, die gestellte Aufgabe vollständig zu lösen. Bei dieser Lösung sind alle wesentlichen Schwierigkeiten ausgeräumt worden.

So ist bedingt durch den geringen Luftdruck in der Arbeitsflughöhe der aerodynamische Auftrieb nur noch gering. Andererseits ist es notwendig, vergleichsweise hohe Geschwindigkeiten einzuhalten, da die Überziehgeschwindigkeit sehr hoch liegt, und zwar etwa achtmal höher als auf Meereshöhe. Die Schallgeschwindigkeit ist in der Arbeitsflughöhe auch geringer als in Meereshöhe, so daß darauf zu achten ist, daß für die tatsächlich mögliche Fluggeschwindigkeit bei der Problemlösung nur eine enge Spanne zur Verfügung steht. Wenn nun eine ausreichend geringe Flächenbelastung gewählt wird, läßt sich sicherstellen, dar die Überziehgeschwindigkeit nicht unterschritten, aber auch nicht der Bereich der Schallgeschwindigkeit erreicht wird.

Günstig wirkt es sich bei der Erfindung aus, daß in der Arbeitsf lughöhe das Gewicht des Raketenantriebs das Flugzeug nicht oder nur noch zum geringen Maße belastet. Die Flächenbelastung wird dabei in dieser Höhe ausreichend niedrig. Die geringe Flächenbelastung erlaubt weiter, das Flugzeug in der Arbeitshöhe als Gleitflugzeug zu betreiben, da ein geringer Gleitwinkel von etwa 1:40 erreichbar ist. Es kann aber auch, wie die Erfindung insbesondere vorsieht, in dieser Arbeitsflughöhe auch mit zusätzlichem Raketenantrieb geflogen werden.

Ein weiterer Vorteil der Erfindung besteht darin, daß bei der Erfindung der Einsatzort treibstoffsparend erreicht werden kann durch Betrieb des Flugzeuges mittels des ersten Antriebs. Der Einsatzort kann also vergleichsweise weit von der Basis entfernt sein.

In Sonderfällen kann das Flugzeug auch in herkömmlicher Weise eingesetzt werden, beispielsweise dadurch, daß auf die Mitnahme des zweiten Antriebes verzichtet wird. In diesem Falle kann immerhin eine Höhe von 60.000 bis etwa 75.000 ft erreicht werden.

Es ist gefunden worden, daß es günstig ist, wenn die Flächenbelastung in der Arbeitsflughöhe etwa 35 Kilogramm pro Quadratmeter aufweist. In der Startposition wird wegen des noch nicht abgebrannten Raketenmotors mit einer Flächenbelastung von etwa 45 Kilogramm pro Quadratmeter zu rechnen sein.

Der zweite Antrieb kann bei der Erfindung eine Flüssigkeitsrakete sein. Die Erfindung bevorzugt jedoch eine Feststoffrakete. Dies vereinfacht die Bauweise wesentlich und hat darüberhinaus den Vorteil des relativ billigen Betriebs. Dabei kann eine oder können mehrere Feststoffraketen vorgesehen sein. Mehrere Raketen bzw. ein steuerbarer Antrieb empfiehlt sich insbesondere dann, wenn auf der Arbeitsflughöhe mit Antrieb geflogen werden soll. Dabei schlägt die Erfindung vor, daß der zweite Antrieb zwei Leistungsbereiche aufweist, und zwar eine höhere Leistung für den Steigflug von der Zwischenflughöhe zur Arbeitsflughöhe und eine niedrigere Leistung für den Horizontalflug in der Arbeitsflughöhe. Am einfachsten läßt sich dies erreichen durch zwei Feststoffraketen unterschiedlicher Leistung für den zweiten Antrieb.

Besonders günstige Verhältnisse werden erreicht, wenn das Flugzeug in Kunststoffbauweise gefertigt ist. Auf diese Weise läßt sich die Forderung nach der relativ geringen Flächenbelastung am leichtesten erfüllen.

Die Erfindung schlägt insbesondere eine Bauweise vor, die gekennzeichnet ist durch einen Doppelrumpf, wobei die beiden Außenrümpfe jeweils den ersten Antrieb, insbesondere in Form von Turbopropmotoren aufnehmen, während der Mittelrumpf den zweiten Antrieb aufnimmt. Dabei ist es günstig, wenn ein hochgestelltes, von den Außenrümpfen getragenes Höhenleitwerk vorgesehen ist. Der Raketenantrieb ist also beim Flugzeug in der Flugzeugmitte angeordnet. Die Doppelrumpfanordnung erleichtert die Unterbringung ausreichender Leistungen des ersten Antriebs.

Die Erfindung betrifft weiter ein Verfahren zum Betrieb eines Flugzeuges der beschriebenen Art. Dieses Verfahren ist dadurch gekennzeichnet, daß das Flugzeug mittels des ersten Antriebes gestartet wird und die Zwischenflughöhe erreicht, daß in der Zwischenflughöhe der erste Antrieb abgeschaltet und der zweite Antrieb eingeschaltet wird, mit der das Flugzeug die Arbeitsflughöhe erreicht, und daß das Flugzeug in der Arbeitsflughöhe antriebslos mit flachem Gleitwinkel oder mittels des mit geringer Leistung betriebenen zweiten Antriebs geflogen wird.

In der Zeichnung ist ein Ausführungsbeispiel der Erfindung schematisch dargestellt. Es zeigen:

Fig. 1 eine perspektivische Darstellung eines Flugzeuges gemäß der Erfindung, und

Fig. 2 ein Schaubild zur Verdeutlichung des vorgesehenen Betriebs dieses Flugzeugs.

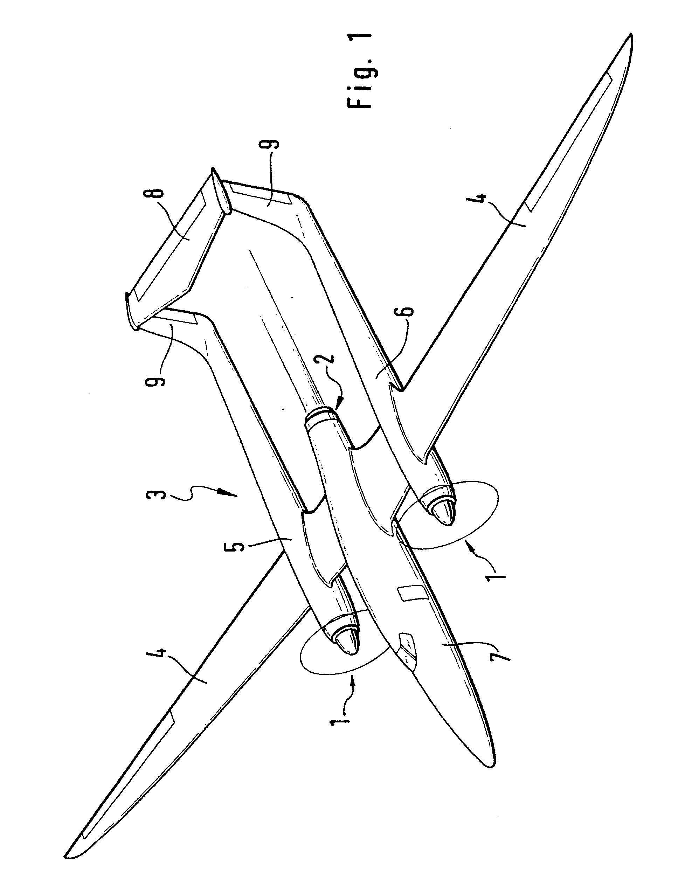

Das in der Fig. 1 dargestellte Flugzeug 3 besitzt zwei Außenrümpfe 5 und 6, die den ersten Antrieb 1 aufnehmen, der vorzugsweise als Turbopropantrieb ausgebildet ist. Der Mittelrumpf 7 nimmt den Piloten und die Ausrüstung auf, und insbesondere auch den zweiten Antrieb 2, der als Raketenmotor, vorzugsweise als Feststoffrakete gestaltet ist.

Die beiden Seitenleitwerke 9 der Außenrümpfe tragen das Höhenleitwerk 8, was durch diese Bauweise außerhalb des Arbeitsbereiches des Raketenmotors verbleibt. Die Flügel 4 haben eine vergleichsweise große Spannweite und ein geeignetes Profil, um sicherzustellen, daß eine günstige Gleitzahl erhalten werden kann.

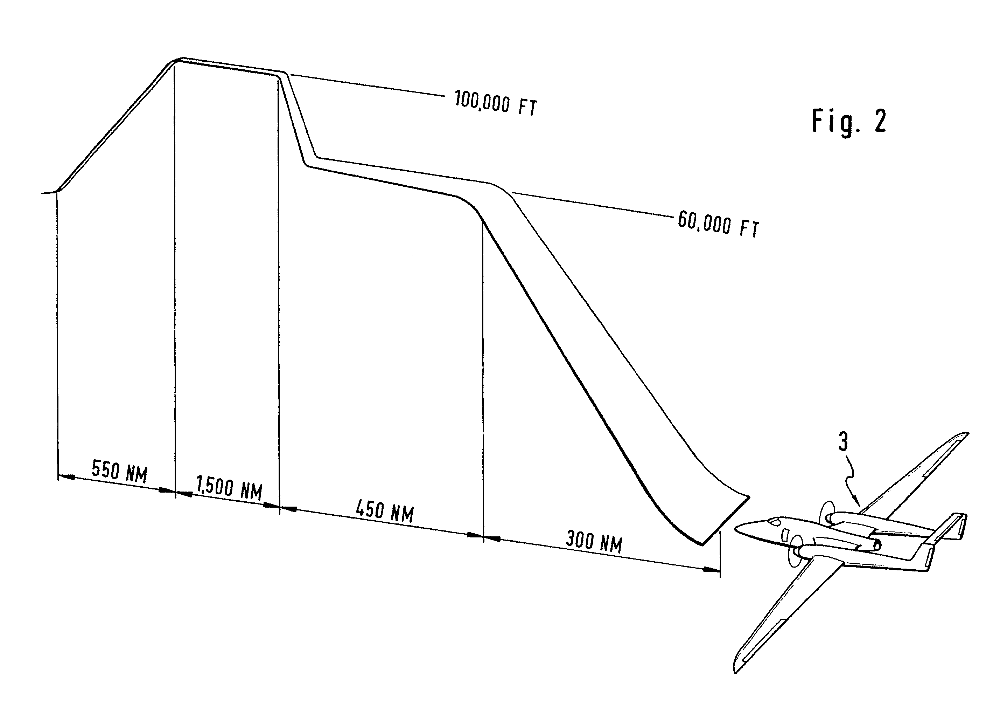

Im Schaubild nach der Fig. 2 ist gezeigt, daß das Flugzeug nach dem Start zunächst eine Zwischenflughöhe von etwa 60.000 ft anstrebt, welcher Steigflug mit einer horizontalen Bewegung von etwa 300 NM (Nautischen Meilen) verbunden ist. Auf der Zwischenflughöhe von 60.000 ft kann ein Horizontalflug eingeschaltet sein, beispielsweise um den Einsatzort zu erreichen. Durch den Betrieb mittels des zweiten Antriebes wird die Arbeitsflughöhe von etwa 100.000 ft erreicht. In dieser Höhe ist ein Horizontalflug oder ein leichter Sinkflug möglich. Dabei ergibt sich eine horizontale Bewegung von etwa 1.500 NM, so daß eine grobe Fläche überdeckt werden kann. Anschließend erfolgt der Abstieg.

Das Schaubild nach Fig. 2 macht die Möglichkeit, auch weiter entfernte Einsatzorte zu erreichen, deutlich und weiter, daß wegen des langanhaltenden Sinkflugs treibstoffsparend oder auch ohne Treibstoff ein Rückflug zur Basis möglich ist.


**Ansprüche**

1. Flugzeug für große Höhen, mit mehreren Antrieben verschiedener Ausbildung, und zwar einem ersten Antrieb mittels eines Verbrennungsmotors, dem zur Verbrennung Außenluft zugeführt wird, und einem zweiten Antrieb durch mindestens eine Rakete, dadurch gekennzeichnet, daß der erste Antrieb (1) derart ausgelegt ist, daß das Flugzeug, dessen Flächen (4) eine geringe Flächenbelastung aufweisen, hierdurch eine Zwischenflughöhe von ca. 60.000 ft erreicht, und daß der zweite Antrieb allein ausreicht, um das Flugzeug von der Zwischenflughöhe auf eine Arbeitsflughöhe von ca. 100.000 ft zu bringen, und zwar ohne hierbei den Unterschallbereich zu verlassen.

2. Flugzeug nach Anspruch 1, dadurch gekennzeichnet, daß die Flächenbelastung in der Arbeitsflughöhe etwa bei 35 Kilogramm pro Quadratmeter liegt.

3. Flugzeug nach einem oder beiden der vorhergehenden Ansprüche, dadurch gekennzeichnet, daß der zweite Antrieb (2) zwei Leistungsbereiche aufweist, und zwar eine höhere Leistung für den Steigflug von der Zwischenflughöhe zur Arbeitsflughöhe und eine niedrigere Leistung für den Horizontalflug in der Arbeitsflughöhe.

4. Flugzeug nach einem oder mehreren der vorhergehenden Ansprüche, gekennzeichnet durch eine oder mehrere Feststoffraketen für den zweiten Antrieb (2).

5. Flugzeug nach einem oder mehreren der vorhergehenden Ansprüche, gekennzeichnet durch zwei Feststoffraketen unterschiedlicher Leistung für den zweiten Antrieb (2).

6. Flugzeug nach einem oder mehreren der vorhergehenden Ansprüche, dadurch gekennzeichnet, daß das Flugzeug (3) in Kunststoffbauweise gefertigt ist.

7. Flugzeug nach einem oder mehreren der vorhergehenden Ansprüche, gekennzeichnet durch eine Doppelrumpfbauweise, wobei die beiden Außenrümpfe (5,6) jeweils den ersten Antrieb (1), insbesondere in Form von Turbopropmotoren aufnehmen, während der Mittelrumpf (7) den zweiten Antrieb (2) aufnimmt.

8. Flugzeug nach einem oder mehreren der vorhergehenden Ansprüche, gekennzeichnet durch ein hochgestelltes, von den Außenrümpfen (5,6) getragenes Höhenleitwerk (8).

9. Verfahren zum Betrieb eines Flugzeugs für große Höhen unter Verwendung verschieden ausgebildeter Antriebe, nach Anspruch 1, dadurch gekennzeichnet, daß das Flugzeug mittels des ersten Antriebes gestartet wird und die Zwischenflughöhe erreicht, daß in der Zwischenflughöhe der erste Antrieb abgeschaltet und der zweite Antrieb eingeschaltet wird, mit der das Flugzeug die Arbeitsflughöhe erreicht, und dar daß Flugzeug in der Arbeitsflughöhe antriebslos mit flachem Gleitwinkel oder mittels des mit geringer Leistung betriebenen zweiten Antriebs geflogen wird.

Fig. 1

EP 0 429 846 A1

Fig. 2

100,000 FT

60,000 FT

550 NM

1,500 NM

450 NM

300 NM

3

EP 0 429 846 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-3215373 (PRICE) <br> * Spalte 1, Zeile 18 - Spalte 1, Zeile 37 * <br> * Spalte 2, Zeile 38 - Spalte 3, Zeile 5 * <br> * Spalte 5, Zeile 24 - Spalte 5, Zeile 66; Figuren 2-5 * <br> --- | 1, 4, 9 | B64C39/02 <br> B64D27/02 |
| A | FR-A-1053294 (S.TE NATIONALE DE CONSTRUCTIONS AERONAUTIQUES DU SUD-OUEST) <br> * Seite 1, linke Spalte, Zeile 7 - Seite 1, linke Spalte, Zeile 14 * <br> * Seite 1, rechte Spalte, Zeile 24 - Seite 1, rechte Spalte, Zeile 34 * <br> * Seite 4, linke Spalte, Zeile 23 - Seite 4, linke Spalte, Zeile 40; Figuren 1-3 * <br> --- | 1, 9 | |
| A | FR-A-498337 (CAPRONI) <br> * Seite 1, Zeile 14 - Seite 1, Zeile 23; Figuren 1-3 * <br> ----- | 7 | |

RECHERCHIERTE SACHGEBIETE (Int. Cl.5 )

B64C
B64D

Der vorliegende Recherchenbericht wurde für alle Patentansprüche erstellt

| Recherchenort | Abschlußdatum der Recherche | Prüfer |
|---|---|---|
| DEN HAAG | 28 FEBRUAR 1991 | ZERI A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................................................
& : Mitglied der gleichen Patentfamilie, übereinstimmendes Dokument

EPO FORM 1503 03.82 (P0403)